(19) Europäisches Patentamt

European Patent Office

Office européen des brevets

(11) **EP 0 971 204 A2**

(12) **EUROPÄISCHE PATENTANMELDUNG**

(43) Veröffentlichungstag:
**12.01.2000 Patentblatt 2000/02**

(51) Int. Cl.⁷: **G01B 11/10**

(21) Anmeldenummer: **99110377.1**

(22) Anmeldetag: **28.05.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **08.07.1998 DE 19830395**

(71) Anmelder:
**W. SCHLAFHORST AG & CO.
D-41061 Mönchengladbach (DE)**

(72) Erfinder:
• **Henze, Herbert
41063 Mönchengladbach (DE)**
• **Rienas, Gerhard
52525 Heinsberg (DE)**

(54) **Verfahren zur berührungslosen Messung von strangförmigem Fasergut**

(57)     Die Erfindung betrifft ein Verfahren zur berührungslosen Messung von strangförmigem Fasergut sowie eine Vorrichtung zur Durchführung des Verfahrens. Das Meßgut 4 wird innerhalb eines Meßbereiches von mindestens einer Strahlenquelle 1 angestrahlt und auf dem Sensorbereich einer Sensorzellen 8,11,12,14 aufweisenden Empfangseinrichtung 10 abgebildet. Die von den einzelnen Sensorzellen 8,11,12,14 erzeugten Signale werden in Meßwerte für die Dimensionen des Meßgutes 4 umgewandelt.

    Erfindungsgemäß werden die Signale der vom Abbild des Meßgutes 4 nur teilweise überdeckten Sensorzellen 12,14 anteilig und proportional zum Ausmaß der Überdeckung im Meßergebnis berücksichtigt.

FIG. 1

**Beschreibung**

Die Erfindung betrifft ein Verfahren zur berührungslosen Messung von strangförmigem Fasergut mit den Merkmalen des Oberbegriffes des Anspruchs 1. Ferner betrifft die Erfindung eine Vorrichtung zur Durchführung des Verfahrens.

Bei strangförmigem Gut, wie zum Beispiel Garnen usw., müssen in einer Reihe von Erzeugungs oder Verarbeitungsprozessen Eigenschaften kontinuierlich gemessen oder überwacht werden. Besonders Eigenschaften wie der Durchmesser des jeweiligen Meßgutes und dessen Schwankungen erfordern Messungen mit hoher Genauigkeit.

Zur Bestimmung des Durchmessers ist es aus der CH-PS 643 060 bekannt, einen fadenförmigen Körper von einer Lichtquelle zu beleuchten und den von ihm verursachten Belichtungszustand mittels eines Bildaufnehmers zu empfangen, indem dessen Fotosensoren einzeln abgetastet werden und der von jedem Fotosensor festgestellte lokale Beleuchtungszustand dahin untersucht wird, ob er einen vorgegebenen Schwellwert erreicht oder überschreitet. Die Signale der Fotosensoren müssen diesen Schwellwert erreichen oder überschreiten, wenn sie als Beitrag zum totalen Meßwert betrachtet werden und in einer Auswerteeinrichtung in Meßwerte für den Durchmesser des Körpers umgeformt werden sollen.

Erreicht oder überschreitet das Signal eines Fotosensors den Schwellwert, wird der Fotosensor als belichtet gewertet. Erreicht das Signal den Schwellwert nicht, wird der Fotosensor als nicht belichtet gewertet. Auf die Anwendung in Garnreinigern wird hingewiesen.

Ein Garn Nm 40 hat einen Durchmesser von ca. 250 µm. Geeignete und übliche Bildaufnehmer für die Durchmesserbestimmung eines derartigen Garnes haben eine Auflösung von 10 bis 30 µm. Bei dem in der CM-PS 643 060 beschriebenen Bildauflöser handelt es sich zum Beispiel um einen CCD-Zeilensensor, der auf einer Breite von 7,5 mm 500 Fotoempfänger beziehungsweise Sensorzellen enthält und somit eine aus dem Abstand beziehungsweise der Breite der Fotoempfänger hervorgehende Auflösung von 15 µm aufweist. Damit kann, bedingt durch das dort beschriebene Verfahren, bei der Durchmesserbestimmung ein Fehler von ± 6 % auftreten, bei anderen o.a. Bildaufnehmern bis in den Bereich ± 10 %. Für die Garnreinigung wird jedoch ein Meßwert mit einem Fehler von weniger als 1 % gefordert.

Aufgabe der Erfindung ist die Schaffung eines Verfahrens, mit dem die Genauigkeit bei der Bestimmung der Dimensionen des Meßgutes erhöht und bei Schwellwert-Verfahren auftretende Abweichungen des ermittelten Wertes vom Ist-Wert verringert werden sowie einer Vorrichtung zur Durchführung des Verfahrens.

Diese Aufgabe wird erfindungsgemäß durch die kennzeichnenden Merkmale der Ansprüche 1 und 12 gelöst.

Durch die gesonderte Auswertung und proportionale Berücksichtigung der Signale der Randpixel wird auf einfache, aber wirkungsvolle Weise, die Größe des möglichen Fehlers beziehungsweise die Abweichung des ermittelten Wertes vom Ist-Wert entscheidend reduziert. Vor allem ist es nicht erforderlich, Sonderausführungen von Sensoren zu beschaffen oder sogar zu entwickeln, sondern es können die üblichen und damit kostengünstigen serienmäßigen Sensoren verwendet werden.

Das erfindungsgemäße Verfahren ist durch die Merkmale der Ansprüche 2 bis 11 vorteilhaft weitergebildet.

Besonders vorteilhaft und einfach ist die Strahlungsstärke als Maß für die überdeckung der Sensoren zu erfassen. Möglich ist aber auch zum Beispiel das Messen der Häufigkeit von Signalen.

Vorzugsweise wirkt als kostengünstige Strahlenquelle eine Lichtquelle. Weitere Möglichkeiten stellen das Arbeiten nach Art eines Stroboskops oder mit Infrarot-Beleuchtung mit jeweils geeigneten Sensoren dar.

Bevorzugt wird ein paralleles Strahlenbündel erzeugt, da so eine weitgehend scharfe Abgrenzung zwischen Licht und Schatten erzielt wird, die eine Abbildung der Randzonen des Meßgutes verbessert. Eine noch schärfere Ausbildung der Konturen wird mit Laserstrahlen erzielt. Laserstrahlen bieten zudem bei der optischen Abtastung durch ihr monochromatisches Licht Vorteile gegenüber dem Farbgemisch einer normalen Glühlampe.

Zur Erfassung der Dimensionen von unrundem Meßgut ist eine Anordnung, bei der das Meßgut aus verschiedenen Richtungen angestrahlt und abgebildet wird, besonders geeignet.

Vorteilhaft ist bei der Dimensionsbestimmung die Ermittlung eines proportionalen Anteils aus den Signalen der Randpixel in Verbindung mit der hohen reproduzierbaren Maßgenauigkeit von Zeilensensoren, wie sie zum Beispiel ein CCD-Zeilensensor bietet.

Ebenfalls vorteilhaft wird ein von der tatsächlichen Größe abweichendes analoges Abbild des Meßgutes auf den Sensorbereich der Empfangseinrichtung projiziert. Ein vergrößertes Abbild überdeckt eine größere Anzahl von Sensorzellen oder Pixeln und führt zu einer höheren Auflösung ohne Veränderung der Sensorzellen der Empfangseinrichtung. Damit wird die Meßgenauigkeit des Verfahrens wesentlich erhöht, ohne anstelle der kostengünstigen serienmäßigen Sensorzellen zum Beispiel einen aufwendigen Zeilensensor einzusetzen, dessen Sensorzellen eine entsprechend verminderte Breite aufweisen. Mit einer verkleinerten analogen Abbildung des Meßgutes auf dem Sensorbereich läßt sich auch Meßgut erfassen, dessen Durchmesser oder Querschnitt größer ist als die Breite des Sensorbereiches des eingesetzten Zeilensensors.

Durch die Ermittlung von Differenzwerten aus den gemessenen Absolutwerten der empfangenden Strahlungsstärke wird auch im Hinblick auf Störeinflüsse wie Streulicht oder Fremdstrahlung ein verbesserter Proportionalitätsfaktor für das Maß der Überdeckung der Randpixel geschaffen.

Die Vorrichtung zur Durchführung des erfindungsgemäßen Verfahrens verbindet in vorteilhafter Weise eine elektronische Recheneinrichtung, die das Ausmaß der Überdeckung der Randprixel proportional in der Auswertung berücksichtigt mit einer Vorrichtung zur Weitergabe oder Weiterverarbeitung des Meßergebnisses und in einer weiteren vorteilhaften Ausbildung mit einer optischen Einrichtung zur Erzeugung eines parallelen Strahlenbündels, mit der entweder ein Strahlenschatten auf den Sensorbereich der Empfangseinrichtung geworfen oder das Meßgut auf den Sensorbereich abgebildet wird. Das Meßergebnis kann auch in bekannter Weise, wie zum Beispiel über einen Drucker, ausgegeben oder angezeigt werden.

Die Erfindung wird nachstehend anhand von Ausführungsbeispielen näher erläutert.

Es zeigen:

Fig. 1    das Prinzip einer Anordnung zur Messung von Garnen,

Fig. 2    eine schematische Darstellung eines Garnabschnittes vor einer Empfangseinrichtung,

Fig. 3    das bei Figur 2 entstehende Impulsbild,

Fig. 4    eine weitere schematische Darstellung eines Garnabschnittes vor einer Empfangseinrichtung,

Fig. 5    das bei Figur 4 entstehende Impulsbild.

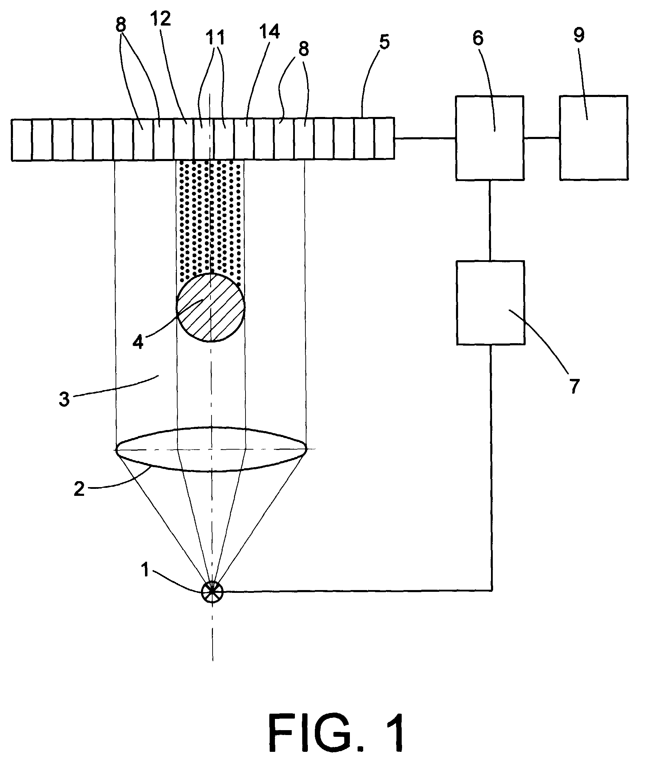

Die in Figur 1 dargestellte Meßanordnung weist eine als Strahlenquelle 1 wirkende punktförmige Lichtquelle auf, deren Strahlen durch eine optische Einrichtung 2 parallelisiert werden. Das parallele Strahlenbündel 3 wird von einem strangförmigen Meßgut 4 durchlaufen und bildet den Schatten des Meßgutes 4 auf den Sensorzellen einer Empfangseinrichtung 5 ab. Die von den einzelnen Sensorzellen erzeugten Signale werden getrennt erfaßt und in einer Recheneinrichtung 6 weiterverarbeitet.

Ein mit der Recheneinrichtung 6 verbundener Regler 7 kann die Helligkeit der Strahlenquelle 1 verändern und somit einen weitgehend gleichbleibenden Helligkeitswert für die nicht überdeckten und Hellpixel 8 genannten Sensorzellen erzeugen. Das Ergebnis der Messung wird von einer Vorrichtung 9 weitergegeben oder weiterverarbeitet.

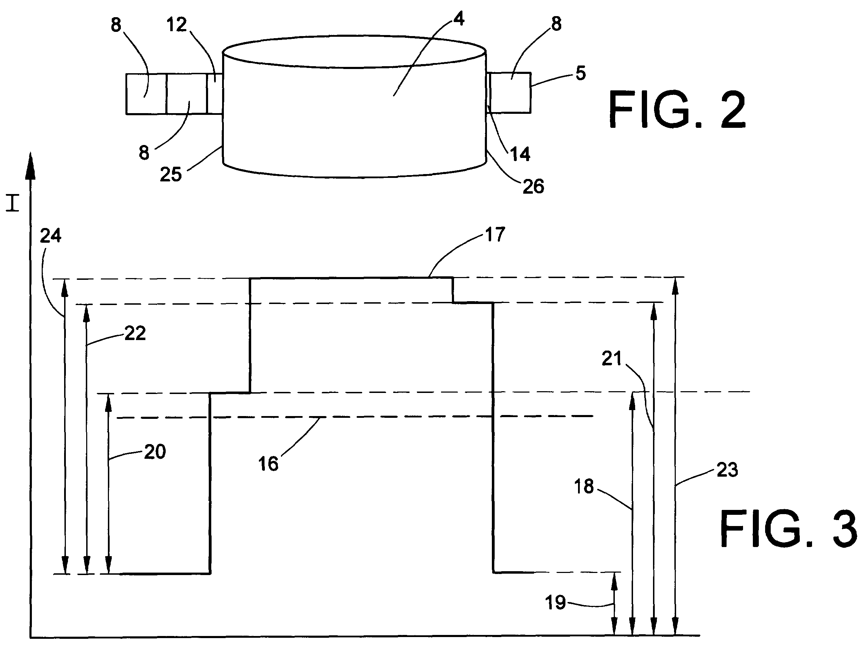

In Figur 2 wird als strangförmiges Meßgut 4 ein Garn an einem in der Empfangseinrichtung 5 wirkenden Zeilensensor 10 vorbeigeführt. Der Durchmesser des Garnes beträgt in diesem Beispiel das 6,5fache der Breite der auch Pixel genannten Sensorzellen. Der dargestellte Garnabschnitt überdeckt fünf Dunkelpixel 11 genannte Sensorzellen völlig und zwei als Randpixel 12, 14 bezeichnete Sensorzellen teilweise.

Je nach Einstellung eines Schwellwertes werden bei den bisher bekannten Verfahren die Randpixel 12, 14 beziehungsweise deren Signale jeweils als völlig abgedeckte oder als völlig bestrahlte Sensorzelle gewertet. Das bei Figur 2 entstehende Impulsbild ist als der gemessenen Helligkeit beziehungsweise der überdeckten Fläche der einzelnen Sensorzellen entsprechendes Rechteckdiagramm 17 in Figur 3 dargestellt.

Die Höhe des Schwellwertes 16 ist durch Strichelung markiert. Dieser Schwellwert 16 wird bei beiden Randpixeln 12, 14 überschritten. Durch die Bewertung der Randpixel 12, 14 als „völlig abgedeckt" entsteht in diesem Beispiel bei der Bestimmung des Durchmessers nach den bekannten Verfahren als Ergebnis ein Durchmesser, der der 7fachen Breite der Sensorzellen entspricht, und damit einer Abweichung des Meßergebnisses vom Ist-Wert von wenigstens 8 %.

Die Bewertung nach dem erfindungsgemäßen Verfahren erfolgt über eine anteilige beziehungsweise proportionale Berücksichtigung der von den Randpixeln 12, 14 gelieferten Werte für die Durchmesserbestimmung des Garnes.

Zunächst wird der vom linken Randpixel 12 gelieferte absolute Impulswert $I_{AL}$ 18 um den von den Hellpixeln 8 gelieferten absoluten Impulswert des Hintergrundes $I_{AH}$ 19 auf den Differenzwert $I_{RL}$ 20 vermindert.

Die Formel lautet:

$$I_{RL} = I_{AL} - I_{AH}$$

In gleicher Weise wird der vom rechten Randpixel 14 gelieferte absolute Impulswert $I_{AR}$ 21 um den absoluten Impulswert des Hintergrundes $I_{AH}$ 19 auf den Differenzwert $I_{RR}$ 22 reduziert.

Die Formel lautet:

$$I_{RR} = I_{AR} - I_{AH}.$$

Der von den Dunkelpixeln 11 gelieferte absolute Impulswert $I_{AD}$ 23 wird ebenfalls um den absoluten Impulswert $I_{AH}$ 19 auf den Differenzwert $I_{RD}$ 24 nach der Formel

$$I_{RD} = I_{AD} - I_{AH}$$

vermindert.

Die Breite der Sensorzellen beziehungsweise die Pixelbreite $B_P$ ist durch die Ausführung des Sensors vorgegeben.

Der als Meßergebnis berechnete Durchmesser $D_G$ des Garnes setzt sich zusammen aus einem Anteil $D_L$ mit

$$D_L = \frac{I_{RL}}{I_{RD}} \times B_P$$

einem Anteil $D_R$ mit

$$D_R = \frac{I_{RR}}{I_{RD}} \times B_P$$

sowie einem Anteil $D_D$ mit

$$D_D = n_D \times B_P,$$

wobei $n_D$ die Anzahl der zwischen dem Randpixel 12 und dem Randpixel 14 liegenden Dunkelpixel 11 angibt.

Die Berechnungsformel für den Durchmesser des Garnes $D_G$ lautet demnach:

$$D_G = D_L + D_D + D_R.$$

Durch Einsetzen der Formeln für $D_L$, $D_D$ und $D_R$ erhält die Gleichung die Form

$$D_G = \frac{I_{RL}}{I_{RD}} \times B_P + n_D \times B_P + \frac{I_{RR}}{I_{RD}} \times B_P$$

und lautet in der umgewandelten Form:

$$D_G = \left( \frac{I_{RL} + I_{RR}}{I_{RD}} + n_D \right) \times B_P$$

Durch das beschriebene Verfahren wird die Genauigkeit der Durchmesserbestimmung derart verbessert, daß die Abweichung des ermittelten Garndurchmessers vom Ist-Wert innerhalb der für die Garnreinigung erforderlichen Größenordnung liegt.

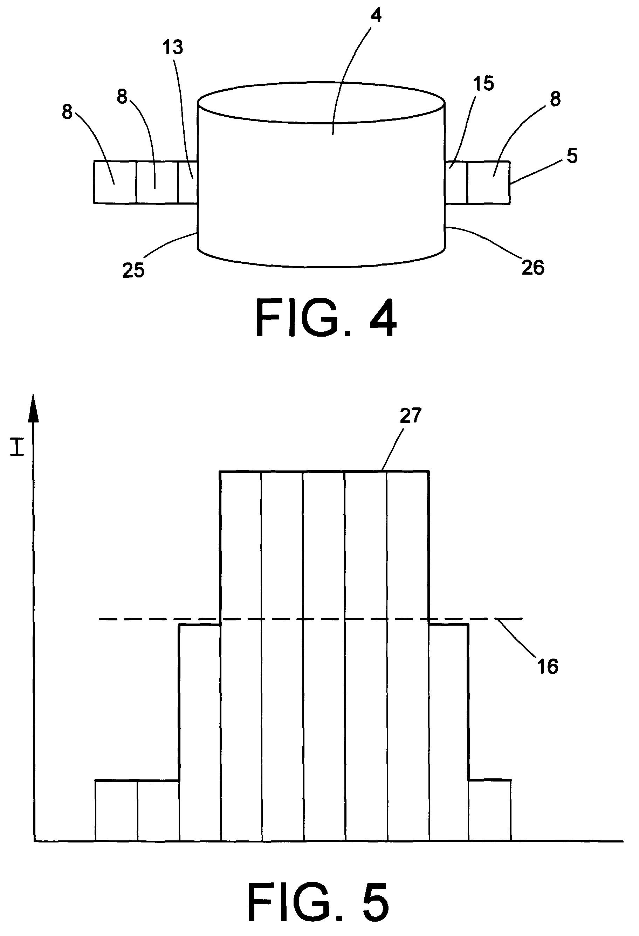

Ein weiteres Ausführungsbeispiel zeigt die Figur 4. Während die Meßanordnung der Figur 2 gleicht, beträgt der Garndurchmesser genau ein Vielfaches der Breite der Sensorzellen (in diesem Beispiel genau die 6fache Breite).

Das bei der Messung nach Figur 4 entstehende Impulsbild ist in Figur 5 als Säulendiagramm 27 dargestellt, um zu unterstreichen, daß jede Sensorzelle einzeln ausgewertet wird.

Die von den Randpixeln 13, 15 gelieferten Werte erreichen oder überschreiten den eingestellten Schwellwert 16 nicht und werden daher bei den bekannten Schwellwert-Verfahren nicht als Beitrag für die Bestimmung des Durchmessers berücksichtigt. Wird der Schwellwert 16 niedriger gelegt, führt der von den Randpixeln 13 und 15 gelieferte Wert zu einer Bewertung der Sensorzelle als „völlig überdeckt". Damit wird ein Durchmesser des Garnes ermittelt, der einer 5fachen oder einer 7fachen Breite einer Sensorzelle entspricht. Der somit bei den bekannten Schwellwert-Verfahren auftretende Fehler beträgt mehr als $\pm$ 16% und entspricht ebenfalls bei weitem nicht den Anforderungen an die Genauigkeit.

Mit dem erfindungsgemäßen Verfahren wird auf einfache und kostengünstige Weise die Genauigkeit des ermittelten Durchmesserwertes derart verbessert, daß die hohen Anforderungen an die Meßgenauigkeit, wie sie bei der Garnreinigung auftreten, erfüllt werden.

**Patentansprüche**

1. Verfahren zur berührungslosen Messung von strangförmigem Fasergut, insbesondere fadenförmigem Fasergut, wobei das Meßgut (4) innerhalb eines Meßbereiches von mindestens einer Strahlenquelle (1) angestrahlt und auf dem Sensorbereich einer Sensorzellen aufweisenden Empfangseinrichtung (5) abgebildet wird sowie die von den einzelnen Sensorzellen erzeugten Signale in Meßwerte für die Dimensionen des Meßgutes (4) umgewandelt werden,
   dadurch gekennzeichnet,

   daß die Signale der vom Abbild des Meßgutes (4) nur teilweise überdeckten und Randpixel (12, 13, 14, 15) genannten Sensorzellen anteilig und proportional zum Ausmaß der Überdeckung im Meßergebnis berücksichtigt werden.

2. Verfahren nach Anspruch 1, dadurch gekennzeichnet, daß bei einem Randpixel (12, 13, 14, 15) aus der jeweils gemessenen Strahlungsstärke ein Meßwert für die Überdeckung ermittelt wird.

3. Verfahren nach einem der Ansprüche 1 oder 2, dadurch gekennzeichnet, daß die Dimension des Meßgutes (4) bestimmt wird aus einem Anteil, der proportional zur Anzahl der vom Abbild des Meßgutes (4) vollständig überdeckten und Dunkelpixel (11) genannten Sensorzellen ist und mindestens einem weiteren Anteil, der proportional zur Überdeckung der jeweiligen Randzelle (12, 13, 14, 15) ist.

4. Verfahren nach einem der Ansprüche 1 bis 3, dadurch gekennzeichnet, daß bei beiden Seitenrändern (25, 26) des Meßgutes (4) jeweils nicht mehr als ein Randpixel (12, 13, 14, 15) detektiert und ausgewertet wird.

5. Verfahren nach einem der Ansprüche 1 bis 4, dadurch gekennzeichnet, daß zum Anstrahlen des Meßgutes (4) ein wenigstens annähernd paralleles Strahlenbündel (3) erzeugt wird.

6. Verfahren nach einem der Ansprüche 1 bis 5, dadurch gekennzeichnet, daß als Strahlenquelle (1) eine Lichtquelle wirkt.

**7.** Verfahren nach Anspruch 6, dadurch gekennzeichnet, daß die Lichtquelle einen Laserstrahl erzeugt.

**8.** Verfahren nach einem der Ansprüche 1 bis 7, dadurch gekennzeichnet, daß als Sensor ein CCD-Zeilensensor (10) eingesetzt wird.

**9.** Verfahren nach einem der Ansprüche 1 bis 8, dadurch gekennzeichnet, daß ein von der tatsächlichen Größe abweichendes analoges Abbild des Meßgutes (4) auf den Sensorbereich der Empfangseinrichtung (5) projiziert wird.

**10.** Verfahren nach einem der Ansprüche 1 bis 9, dadurch gekennzeichnet, daß zur Ermittlung der Werte für die empfangende Strahlungsstärke beziehungsweise die Impulsfolge eines Randpixels (12, 13, 14, 15) der von diesem Randpixel (12, 13, 14, 15) gelieferte Wert um den von einer vom Meßgut (4) nicht überdeckten und Hellpixel (8) genannten Sensorzelle gelieferten Wert (19) vermindert wird und der so erhaltene Differenzwert (20) dividiert wird durch einen weiteren Differenzwert (24), der ebenfalls durch Subtrahieren des Wertes (19) von dem von einem Dunkelpixel (11) gelieferten Wert (23) entsteht.

**11.** Verfahren nach einem der Ansprüche 1 bis 10, dadurch gekennzeichnet, daß zur Kompensation von Störfaktoren wie Alterung, Spannungsschwankungen oder Verschmutzungserscheinungen an der Strahlenquelle (1), der zur Erzeugung von annähernd parallelen Strahlenbündeln (3) verwendeten optischen Anordnung (2) oder den Sensorzellen die Strahlungsstärke der Strahlenquelle (1) selbsttätig geregelt wird.

**12.** Vorrichtung zur Durchführung des Verfahrens nach einem der Ansprüche 1 bis 11 mit einer Einrichtung zum Bewegen des Meßgutes (4) in Längsrichtung quer durch den Strahlungsbereich einer Strahlenquelle (1), einer Empfangseinrichtung (5), die einzelne Sensorzellen zur Erzeugung von elektrischen Signalen aufweist und so angeordnet ist, daß durch die Strahlung ein Abbild des Meßgutes (4) auf dem Sensorbereich der Empfangseinrichtung (5) erzeugt wird, gekennzeichnet durch eine elektronische Recheneinrichtung (6), die das Ausmaß der Überdeckung der Randpixel (12, 13, 14, 15) proportional in der Auswertung berücksichtigt sowie eine Vorrichtung zur Weitergabe oder Weiterverarbeitung (9) des die Signale der Randpixel (12, 13, 14, 15) anteilig und proportional berücksichtigenden Meßergebnisses.

**13.** Vorrichtung nach Anspruch 12, gekennzeichnet durch eine optische Einrichtung (2) zur Erzeugung eines parallelen Strahlenbündeis (3) und/oder eines Abbildes des Meßgutes (4) auf dem Sensorbereich der Empfangseinrichtung (5).

# FIG. 1

FIG. 2

FIG. 3

FIG. 4

FIG. 5